# FASCICULE DE BREVET EUROPEEN

(11) **EP 2 250 357 B1**
(45) Date de publication et mention de la délivrance du brevet: **30.11.2011**
(21) Numéro de dépôt: 09720573.6
(22) Date de dépôt: 28.01.2009
(51) Int. Cl.: F02C 7/047, B64D 15/04, B64D 33/02

(54) **STRUCTURE D'ENTREE D'AIR POUR UNE NACELLE D'UN AERONEF**
LUFTANSAUGSTRUKTUR FÜR EINE FLUGZEUGTRIEBWERKSGONDEL
AIR INTAKE STRUCTURE FOR AN AIRCRAFT NACELLE

(30) Priorité: 27.02.2008 FR 0801071
(43) Date de publication de la demande: 17.11.2010
(73) Titulaire: Aircelle, 76700 Gonfreville L'Orcher (FR)
(72) Inventeur: VAUCHEL, Guy, F-76600 Le Havre (FR); BEILLIARD, Stéphane, F-31300 Toulouse (FR)
(74) Mandataire: Gaillarde, Frédéric F. Ch.
(86) Numéro de dépôt international: PCT/FR2009/000095
(87) Numéro de publication internationale: WO 2009/112695

(56) Documents cités:
- EP-A- 0 918 150
- FR-A- 2 921 901
- US-A- 4 688 745
- US-H- H 648

## Description

La présente invention se rapporte à une structure d'entrée d'air apte à être montée en amont d'une structure médiane de nacelle pour un moteur d'un aéronef.

Un avion est propulsé par un ou plusieurs ensembles propulsifs comprenant chacun un turboréacteur logé dans une nacelle tubulaire. Chaque ensemble propulsif est rattaché à un aéronef par un mât situé généralement sous une aile ou au niveau du fuselage.

Une nacelle présente généralement une structure comprenant une entrée d'air en amont du moteur et une section médiane apte à entourer une soufflante du turboréacteur, une section aval abritant des moyens d'inversion de poussée et apte à entourer la chambre de combustion du turboréacteur. La nacelle est généralement terminée par une tuyère d'éjection dont la sortie est située en aval du turboréacteur.

L'entrée d'air comprend, d'une part, une lèvre d'entrée adaptée pour permettre la captation optimale vers le turboréacteur de l'air nécessaire à l'alimentation de la soufflante et des compresseurs internes du turboréacteur, et d'autre part, une structure aval, sur laquelle est rapportée la lèvre, destinée à canaliser convenablement l'air vers les aubes de la soufflante. L'ensemble est rattaché en amont d'un carter de la soufflante appartenant à la section amont de la nacelle.

En vol, selon les conditions de température et d'humidité, de la glace peut se former sur la nacelle au niveau de la surface externe de la lèvre d'entrée d'air. La présence de glace ou de givre modifie les propriétés aérodynamiques de l'entrée d'air et perturbe l'acheminement de l'air vers la soufflante.

Une solution pour dégivrer ou déglacer la surface externe consiste à éviter que de la glace ne se forme sur cette surface externe en prélevant de l'air chaud au niveau du compresseur du turboréacteur et en l'amenant jusqu'à la lèvre d'entrée d'air afin de réchauffer les parois.

Dans le document US 4 688 745, qui est considéré l'état de la technique la plus proche, on propose une nacelle 10 comprenant une structure d'entrée d'air 12 comportant un compartiment de dégivrage 13. La structure d'entrée d'air 12 est apte à être montée en amont d'une structure médiane 14.

Afin d'assurer le dégivrage de la structure d'entrée d'air 12, un dispositif d'alimentation en air chaud sous la forme d'un tube d'alimentation 15 véhicule de l'air chaud prélevé dans la structure médiane 14 vers le compartiment de dégivrage 13.

Le compartiment de dégivrage 13 est délimité par :
- une paroi externe 16 intégrant une lèvre, apte à être montée mobile par rapport à ladite structure médiane 14 entre une position de fonctionnement et une position de maintenance ;
   on entend par « position de fonctionnement » la configuration de la structure d'entrée d'air dans laquelle l'aéronef est apte à voler et la « position de maintenance » la configuration de la structure dans laquelle la maintenance sur la structure d'entrée d'air peut être réalisée ; et
- une cloison amont 18.

Afin de former le tube d'alimentation coudé, un tube rectiligne est d'abord inséré à travers d'un orifice de la cloison amont 18, l'orifice étant de dimension égale au diamètre dudit tube. Puis, l'extrémité libre 19 présente dans le compartiment de dégivrage 13 est courbée jusqu'à un angle égal à 90° par rapport à l'axe principal 20 du tube rectiligne. L'étanchéité entre le tube d'alimentation coudé 15 et la cloison amont 18 est assurée par une platine de contact de forme circulaire 21.

Néanmoins, outre la compléxité de mise en oeuvre de ce dispositif de d'alimentation, la zone de jonction entre la cloison amont 18 et le tube d'alimentation coudé 15 ne présente pas une bonne étanchéité. De ce fait, de l'air chaud s'échappe du compartiment de dégivrage 13 ce qui endommage certains équipements sensibles à la chaleur se trouvant dans la zone de la structure médiane 14.

Dans la demande de brevet FR07/07049, on propose un dispositif d'alimentation en air chaud dans lequel l'air chaud est distribué au moyen d'un tube d'alimentation raccordé à un collecteur (dit « picolo »). Le collecteur est monté solidaire sur la cloison.

Néanmoins, la majorité des efforts dus à la pression de l'air chaud véhiculé dans le tube d'alimentation s'exerce sur le collecteur, et donc sur la cloison, et sur la structure d'entrée d'air, ce qui fragilise ces derniers.

On notera de plus que ces dispositifs de la technique antérieure ne sont pas du tout adaptés à un dispositif du type LFC (« Laminar Forward Cowl ») tel que décrit dans la demande de brevet FR0608599 déposée par la demanderesse, où se posent des problèmes d'étanchéité entre des parties mobiles (lèvre d'entrée d'air intégrée au panneau extérieur de l'entrée d'air) et fixes (alimentation d'air chaud + divers équipements) de l'entrée d'air.

Un but de la présente invention est donc de fournir une structure d'entrée d'air comportant un dispositif de dégivrage efficace, simple à mettre en oeuvre, étanche et solide.

A cet effet, selon un premier aspect, l'invention a pour objet une structure d'entrée d'air apte à être montée en amont d'une structure médiane d'une nacelle pour un moteur d'un aéronef, ladite structure d'entrée d'air comprenant :
- une paroi externe intégrant une lèvre,
- une cloison amont définissant avec la paroi externe un compartiment de dégivrage dans la dite lèvre et comprenant un orifice,
- un dispositif d'alimentation en air chaud destiné à alimenter le compartiment de dégivrage en air chaud, ledit dispositif comprenant un tube d'alimentation en air chaud et un élément d'étanchéité périphérique entourant ledit tube d'alimentation,
caractérisée en ce que le tube d'alimentation en air chaud comporte une extrémité libre coudée, l'orifice de la cloison amont étant configuré pour permettre le passage de l'extrémité libre selon l'axe principal du tube d'alimentation, et en ce que l'élément d'étanchéité comporte une platine de contact entourant ledit tube de sorte à assurer l'étanchéité au niveau de la cloison amont.

On entend ici par « coudé » un tube dont l'axe principal est non colinéaire à l'axe secondaire de l'extrémité libre. Les axes secondaire et principal font entre eux un angle non nul, avantageusement sensiblement égal à 90°.

L'étanchéité de la cloison amont permet d'éviter toute fuite d'air chaud dans la structure médiane et ainsi d'isoler thermiquement la structure d'entrée d'air du reste des éléments de la nacelle.

La structure selon l'invention est particulièrement avantageuse dans le cas où la structure est montée mobile en translation par rapport à la structure médiane entre une position de fonctionnement et une position de maintenance. Cette configuration est dite LFC (« laminar forward cowl ») et est notamment décrite dans la demande de brevet FR0608599 susmentionnée. Dans ce cas, le dispositif d'alimentation est monté fixe sur la structure médiane et doit pouvoir être retiré du compartiment de dégivrage qui est mobile en translation par rapport à la structure médiane. Or, la structure selon l'invention permet une étanchéité efficace à chaque fois que le dispositif d'alimentation est réinséré dans l'orifice de la cloison amont pour obtenir une position de fonctionnement.

La structure d'entrée d'air selon l'invention permet de manière avantageuse un dégivrage efficace tout en assurant une bonne étanchéité au niveau de la cloison amont. Ainsi, sensiblement tout l'air chaud véhiculé par le tube d'alimentation débouche dans le compartiment de dégivrage sans endommager la structure d'entrée d'air. En effet, du fait que le tube d'alimentation est coudé, l'air chaud pénètre dans le compartiment de dégivrage selon un angle non colinéaire à l'axe principal du tube d'alimentation. Dans le cas où l'axe principal et l'axe secondaire font un angle sensiblement égal à 90°, la direction de l'écoulement de l'air chaud est sensiblement perpendiculaire à l'axe principal. De ce fait, l'air chaud est mis en circulation de manière circonférentielle sans induire de point chaud sur la paroi externe de la structure d'entrée d'air.

Parallèlement, la structure de l'invention permet de limiter la pression sur la paroi externe et sur la lèvre et donc de limiter les déformations de la structure d'entrée d'air. Autrement dit, la forme coudée du tube d'alimentation dans le compartiment de dégivrage permet d'éviter un impact direct de l'air venant du moteur sous pression contre la lèvre. En effet, la direction des efforts générés par l'air chaud est, tout d'abord, selon l'axe principal du tube d'alimentation, en général sensiblement perpendiculaire à la cloison amont. Puis, l'air chaud pénètre dans le compartiment de dégivrage suivant l'axe secondaire non colinéaire à l'axe principal. Autrement dit, la pression due à l'air chaud pénétrant dans le compartiment de dégivrage n'est pas orientée vers la paroi externe de la structure d'entrée d'air.

De plus, dans la structure de l'invention, la mise en oeuvre du dispositif d'alimentation est simplifiée. En effet, le tube d'alimentation déjà coudé pénètre dans le compartiment de dégivrage en traversant l'orifice de la cloison amont configuré pour permettre le passage de l'extrémité libre coudée selon l'axe principal du tube d'alimentation. Autrement dit, lors du montage du dispositif d'alimentation, le manipulateur n'a pas besoin de courber l'extrémité libre dans le compartiment de dégivrage.

Selon d'autres caractéristiques de l'invention, la structure de l'invention comporte l'une ou plusieurs des caractéristiques optionnelles suivantes considérées seules ou selon toutes les combinaisons possibles :
- la paroi externe est montée mobile par rapport à la structure externe médiane entre une position de fonctionnement dans laquelle l'étanchéité entre le dispositif d'alimentation et l'orifice de la cloison amont est réalisée et une position de maintenance dans laquelle la cloison et le dispositif d'alimentation sont distants par coulissement de la structure d'entrée d'air vers l'amont de la nacelle ;
- l'orifice est configuré pour permettre le passage de la platine et de l'extrémité libre ce qui permet un passage aisé du tube d'alimentation au travers de la cloison amont ;
- un tube externe concentrique entoure au moins partiellement le tube d'alimentation ce qui permet d'améliorer l'isolation thermique du tube d'alimentation vis-à-vis des autres éléments présents dans la nacelle et d'assurer une fonction de sécurité en cas de rupture du tube d'alimentation ;
- le tube d'alimentation, le tube externe concentrique et la platine de contact sont formés d'une seule pièce ce qui permet d'éviter de rapporter des pièces supplémentaires, de type joint, pour assurer l'étanchéité entre les différents éléments ;
- la platine de contact a une forme sensiblement allongée suivant l'axe secondaire de l'extrémité libre du tube d'alimentation, la plus grande longueur suivant l'axe secondaire de l'extrémité libre de la tubulure étant supérieure à la longueur de l'extrémité libre coudée ce qui permet d'améliorer encore davantage l'étanchéité ;
- l'extrémité libre du tube d'alimentation est sensiblement raccordée à une tubulure à l'intérieur du compartiment de dégivrage afin de collecter l'air chaud provenant du tube d'alimentation ce qui permet de collecter et de diriger l'air chaud de manière plus uniforme dans le compartiment de dégivrage ;
- la tubulure comporte à l'extrémité en regard du tube d'alimentation une ouverture partielle destinée à recevoir l'extrémité libre coudée du tube d'alimentation ce qui permet un chevauchement du tube d'alimentation et de la tubulure permettant ainsi de mieux collecter l'air chaud ;
- la tubulure comporte une partie sensiblement évasée ce qui permet de ne pas perturber l'air qui sort du tube d'alimentation vers la tubulure ;
- l'extrémité libre du tube d'alimentation et la tubulure comportent chacun une platine destinée à être en regard l'une de l'autre ce qui permet d'obtenir une bonne collecte de l'air chaud ;
- la platine de la tubulure est formée d'une seule pièce avec la paroi de la tubulure ce qui permet de limiter les étanchéités entre la platine de la tubulure et la tubulure elle-même ;
- l'angle des deux platines par rapport à l'axe secondaire de l'extrémité libre coudée est sensiblement égale à 45° ce qui permet d'améliorer la cinématique et la fiabilité d'écrasement de l'étanchéité ;
- ladite tubulure s'étend de part et d'autre de ladite extrémité libre coudée, et cette tubulure comprend une ouverture apte à coopérer avec une collerette complémentaire portée par ladite extrémité ;
- ladite ouverture est formée dans un renflement de ladite tubulure ;
- au moins un dispositif de centrage est disposé entre la platine de contact et la cloison amont ou un élément de support rapporté sur la cloison amont ce qui permet de limiter les déplacements relatifs entre les structures mobiles et fixes de la nacelle;
- la cloison amont ou l'élément de support comporte un logement recevant un dispositif de centrage lorsque le dispositif d'alimentation en air chaud se décale suivant l'axe secondaire de l'extrémité libre du tube d'alimentation ce qui permet avantageusement d'absorber tout débattement ou de permettre des positions intermédiaires lorsque le dispositif d'alimentation est amené à bouger ;
- l'élément d'étanchéité comporte au moins un joint d'étanchéité séparant la platine de contact et la cloison amont ou l'élément de support rapporté sur la cloison amont ;
- la platine de contact et l'élément de support ont des formes complémentaires et en ce qu'au moins deux joints assurent l'étanchéité entre ledit élément de support et ladite platine.

Selon un autre aspect, l'invention a pour objet une nacelle pour un moteur d'un aéronef, caractérisée en ce qu'elle comprend une structure d'entrée d'air selon l'invention.

L'invention sera davantage comprise à la lecture de la description non limitative qui va suivre, faite en référence aux figures ci-annexées.

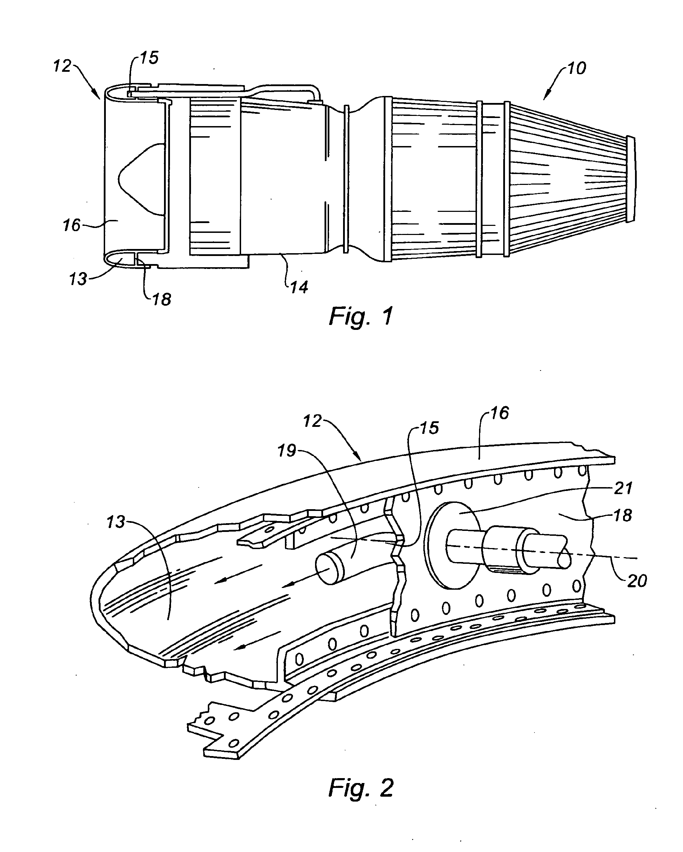

- La figure 1 est une vue de côté partielle représentant une nacelle comportant une structure d'entrée d'air de l'art antérieur ;
- La figure 2 est une vue en perspective partielle de la structure d'entrée d'air selon la figure 1 ;
- La figure 3 est une coupe longitudinal d'un premier mode de réalisation d'un dipositif d'alimentation d'une structure d'entrée d'air selon l'invention ;
- La figure 4 est une vue de côté du mode de réalisation de la figure 3;
- La figure 5 est une coupe longitudinale d'un deuxième mode de réalisation d'un dipositif d'alimentation d'une structure d'entrée d'air selon l'invention ;
- La figure 6 est une coupe longitudinale d'un troisième mode de réalisation d'un dipositif d'alimentation d'une structure d'entrée d'air selon l'invention ;
- La figure 7 est une coupe longitudinale d'un quatrième mode de réalisation d'un dipositif d'alimentation d'une structure d'entrée d'air selon l'invention ;
- La figure 8 est une coupe longitudinale d'un cinquième mode de réalisation d'un dipositif d'alimentation d'une structure d'entrée d'air selon l'invention ;
- La figure 9 est une coupe longitudinale d'un sixième mode de réalisation d'un dipositif d'alimentation d'une structure d'entrée d'air selon l'invention ;
- Les figures 10a et 10b sont une coupe longitudinale d'une variante du mode de réalisation de la figure 9, en positions respectives de maintenance et de fonctionnement.

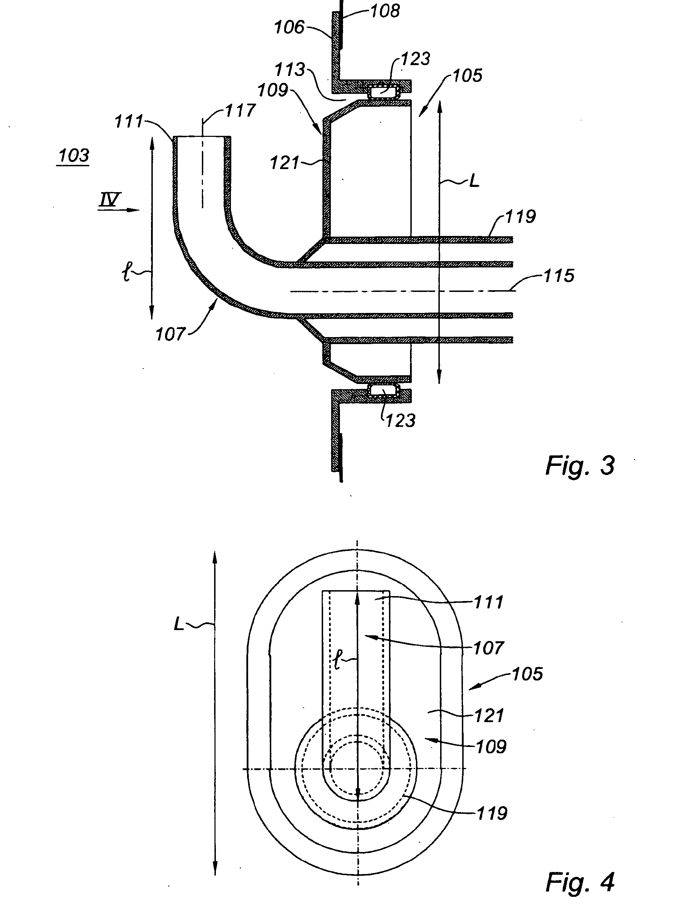

Selon le mode de réalisation représenté aux figures 3 et 4, la structure d'entrée d'air de l'invention est destinée à être montée en amont d'une structure médiane de nacelle pour un moteur d'un aéronef (non représentés).

La structure d'entrée d'air de l'invention comprend une paroi externe (non représentée) intégrant une lèvre d'entrée d'air.

La structure selon l'invention comprend également une cloison amont 108 définissant avec la paroi externe un compartiment de dégivrage 103 dans la lèvre et comprenant un orifice 113.

D'une manière préféré, la paroi externe est montée mobile par rapport à la structure externe médiane entre une position de fonctionnement dans laquelle l'étanchéité entre le dispositif d'alimentation 105 et l'orifice 113 de la cloison amont est réalisée et une position de maintenance dans laquelle la cloison amont 108 et le dispositif d'alimentation 105 sont distants par coulissement de la structure d'entrée d'air vers l'amont de la nacelle : il s'agit dans ce cas d'une structure de type « LFC » telle que mentionnée plus haut.

Ainsi, lors de chaque opération de maintenance, la structure de l'invention coulisse vers l'amont de la nacelle, le dispositif de d'alimentation 105 restant fixe sur la structure médiane. Lorsque l'opérateur désire remettre la structure de l'invention dans une position de fonctionnement, ce dernier coulisse la structure d'entrée d'air vers l'aval de la nacelle. Le dispositif d'alimentation 105 permet de nouveau d'alimenter le compartiment de dégivrage 103 en air chaud, l'étanchéité étant alors réalisée au moment où la structure de l'invention est remise dans une position de fonctionnement.

Selon un mode de réalisation, un élément de support 106 est rapporté sur la cloison amont 108 par tout moyen connu de l'homme du métier. L'élément de support 106 peut avoir n'importe quelle forme connue de l'homme du métier qui permet de garantir la fiabilité de l'étanchéité au niveau de la cloison amont 108.

La structure selon l'invention comporte en outre un dispositif d'alimentation en air chaud 105 destiné à alimenter le compartiment de dégivrage 103 en air chaud.

Le dispositif d'alimentation 105 comprend un tube d'alimentation en air chaud 107 et un élément d'étanchéité périphérique 109 entourant ledit tube d'alimentation 107.

Le tube d'alimentation en air chaud 107 comporte une extrémité libre coudée 111. L'orifice 113 est configuré pour permettre le passage de l'extrémité libre 111 selon l'axe principal 115 dudit tube. L'orifice 113 est de dimension telle qu'il peut laisser passer au moins l'extrémité libre 111, voire également une partie de l'élément d'étanchéité 109.

L'axe principal 115 du tube d'alimentation forme un angle non nul avec l'axe secondaire 117. Ledit angle est avantageusement égal à sensiblement 90°.

L'extrémité libre coudée 111 peut être notamment divisée en plusieurs sous extrémités libres coudées, notamment de formes différentes connues de l'homme du métier. L'extrémité libre coudée 111 peut être également percée dans sa partie cylindrique.

Le dispositif d'alimentation 105 subit un effort de déplacement induit par la pression résultant du passage de l'air chaud. Afin de limiter cet effort de déplacement, il est possible de monter, par tout moyen connu de l'homme du métier, le dispositif d'alimentation sur un support rapporté sur une structure fixe de la nacelle.

Selon un mode de réalisation préféré, un tube externe 119 concentrique entoure au moins partiellement, notamment totalement, le tube d'alimentation 107. La présence du tube externe 119 permet de manière avantageuse d'améliorer l'isolation thermique du tube d'alimentation 107 vis-à-vis des autres éléments présents dans la structure médiane de la nacelle. En effet, le tube d'alimentation en air 107 chaud traverse des zones de la nacelle qui sont équipées d'équipements, notamment électriques et électroniques, qui ne supportent pas une trop forte chaleur.

Par ailleurs, le tube externe 119 présente une sécurité en cas de rupture du tube d'alimentation 107. En effet, en cas d'éclatement du tube d'alimentation 107, l'air chaud ne s'échappe pas dans la structure médiane mais continue à être véhiculé vers le compartiment de dégivrage 103 par le tube externe 119.

Selon un mode de réalisation, une partie du tube externe 119 débouche dans le compartiment de dégivrage 103 ce qui permet d'amener l'air chaud au sein du compartiment de dégivrage 103 sans fuite d'air chaud en cas de rupture du tube d'alimentation 107.

De manière générale, l'élément d'étanchéité 109 a pour rôle d'assurer une bonne étanchéité avec la cloison amont 108 ou l'élément de support 106 rapporté sur la cloison amont.

Pour cela, l'élément d'étanchéité 109 comporte une platine de contact 121 entourant le tube d'alimentation 107 de sorte à assurer l'étanchéité au niveau de la cloison amont 108. De manière préférentielle, l'orifice 113 est configuré pour permettre le passage de la platine de contact 121 et de l'extrémité libre 111 ce qui permet un passage aisé du tube d'alimentation 107 au travers de la cloison amont 108.

Typiquement, la platine de contact 121 a une forme adaptée à la configuration de sortie du tube d'alimentation 107. De manière préférentielle, la platine de contact 121 a une forme sensiblement allongée suivant l'axe secondaire 117 de l'extrémité libre du tube d'alimentation. La plus grande longueur L de la platine de contact 121 suivant l'axe secondaire 117 est supérieure ou égale à la longueur I de l'extrémité libre 111 coudée. Cette forme allongée permet d'améliorer encore davantage l'étanchéité puisque l'orifice 113 est de même dimension voire de dimension inférieure à la platine de contact 121. Ainsi, le tube d'alimentation 107, voire la platine de contact 121, traversant cet orifice 113 est introduit dans le compartiment de dégivrage 103 sans détérioration ni modification.

Typiquement, la platine de contact 121 a une forme oblongue, voire elliptique ou rectangulaire.

Selon un mode de réalisation préféré, le tube d'alimentation 107, le tube externe concentrique 119 et la platine de contact 121 sont formés d'une seule pièce. Typiquement, le matériau utilisé est du titane ou de l'inconel. Ainsi, il n'est pas nécessaire d'introduire des pièces supplémentaires, de type joint, pour assurer l'étanchéité entre les différents éléments du dispositif d'alimentation 105.

Selon un mode de réalisation préférentiel, l'élément d'étanchéité 109 comporte au moins une pièce d'étanchéité, de type joint 123, séparant la platine de contact 121 et la cloison amont 108 ou l'élément de support 106 rapporté sur la cloison amont. Les pièces d'étanchéité sont de manière intéressante tolérantes au coulissement de la structure d'entrée d'air de l'invention tout en assurant une étanchéité efficace. Dans ce cas, l'étanchéité est obtenue par écrasement du ou des joints 123. La valeur d'écrasement du ou des joints 123 est fonction des déplacements relatifs entre les structures mobile et fixe de la nacelle lors de la phase de fonctionnement, notamment en vol.

L'expression « pièce d'étanchéité », utilisée dans le cadre de la présente invention, désigne tout système d'étanchéité apte à résister aux températures élevées de l'air chaud circulant dans le tube d'alimentation 107 (typiquement de l'ordre de 500°C), et tolérant au coulissement. Cette pièce d'étanchéité peut en particulier être formée par un joint en matériau adapté.

Selon un mode de réalisation, un joint d'étanchéité 123 est disposé sur toute la circonférence de la platine de contact 121. Selon un autre mode de réalisation, plusieurs joints d'étanchéité 123 sont disposés de manière discrète sur l'ensemble de la circonférence de la platine de contact 121.

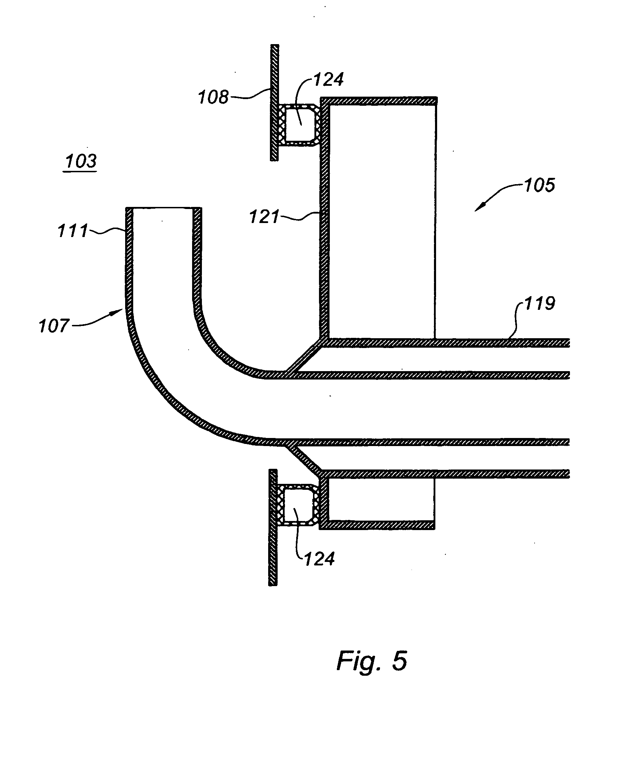

Dans le cas où les dimensions de l'orifice 113 sont plus faibles que celles de la platine de contact 121 comme illustré à la figure 5, la platine de contact 121 vient en butée contre la cloison amont 108. Typiquement, un ou plusieurs joints d'étanchéité 124 sont montés entre la platine de contact 121 et la cloison amont 108. Comme indiqué plus haut, un joint d'étanchéité est disposé de manière continue entre les faces en contact de la cloison amont 108 et la platine de contact 121. Selon une variante, plusieurs joints sont disposés de manière discrète entre lesdites faces en contact.

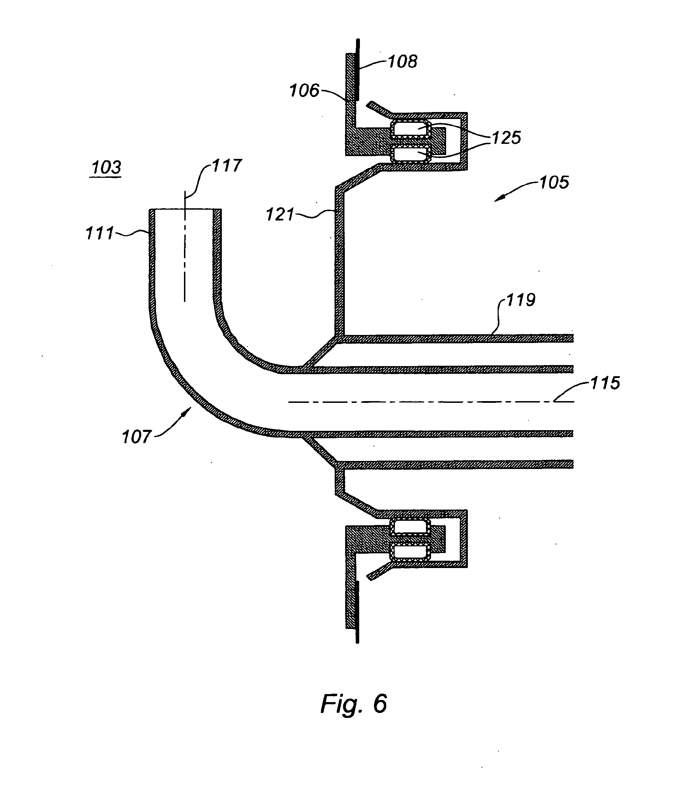

Selon un autre mode de réalisation représenté à la figure 6, la platine de contact 121 et l'élément de support 106 ont des formes complémentaires. Au moins deux joints 125 assurent l'étanchéité entre ledit élément de support 106 et ladite platine de contact 121. Les joints 125 sont disposés soit de manière continue soit de manière discrète sur la périphérie latérale des parties de la platine de contact 121 de forme complémentaire de l'élément support 106.

Il est également possible d'avoir plusieurs lignes d'étanchéité constituées de joints ou de tout autre dispositif connu de l'homme du métier assurant une étanchéité. L'augmentation des lignes d'étanchéité permet d'améliorer encore d'avantage l'isolement thermique de la structure médiane.

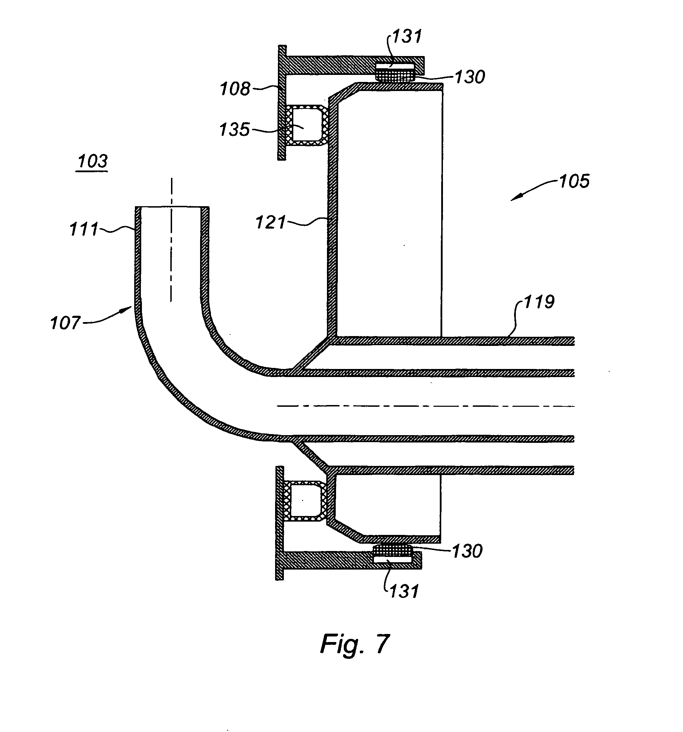

Selon encore un autre mode de réalisation représenté à la figure 7, au moins un dispositif de centrage 130 est disposé entre la cloison amont 108 ou un élément de support rapporté sur la cloison amont et la platine de contact 121. Ainsi, de manière avantageuse, les déplacements relatifs entre les structures fixe et mobile sont limités. De manière préférentielle, la cloison amont 108 ou l'élément de support comporte un logement 131 recevant un dispositif de centrage 130 lorsque le dispositif d'alimentation en air chaud 105 se décale suivant l'axe secondaire 117 de l'extrémité libre du tube d'alimentation. Ainsi, il est possible d'absorber tout débattement ou de permettre des positions intermédiaires lorsque le dispositif d'alimentation 105 est amené à bouger par rapport à sa position de montage.

Le ou les dispositifs de centrage 130 sont disposés par exemple sur la périphérie latérale de la platine de contact 121 ou sur un élément de support rapporté sur la cloison amont. De même, un dispositif de centrage est disposé de manière continue entre les faces de la cloison amont 108 et de la platine de contact 121 qui sont en contact ou, selon une autre variante, plusieurs dispositifs de centrage sont disposés de manière discrète.

Le dispositif de centrage 130 peut être couplé à une pièce d'étanchéité de type joint 135 ce qui permet de limiter les écrasements afin d'assurer l'intégrité de l'étanchéité.

L'extrémité libre 111 du tube d'alimentation est sensiblement raccordée à une tubulure à l'intérieur du compartiment de dégivrage 103 afin de collecter l'air chaud provenant du tube d'alimentation 107 ce qui permet de collecter et de diriger l'air chaud de manière plus uniforme dans le compartiment de dégivrage 103.

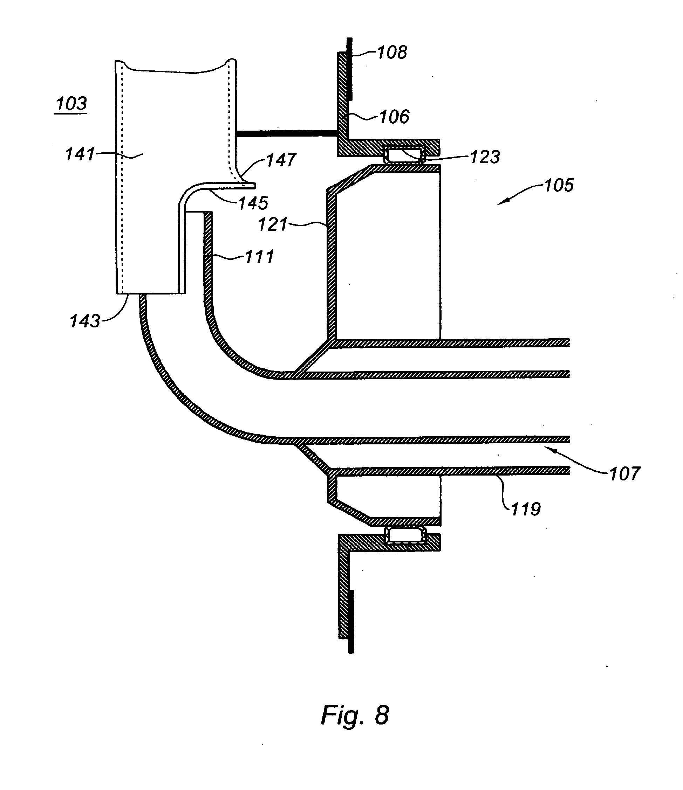

Selon le mode de réalisation représenté à la figure 8, la tubulure 141 comporte, en une extrémité 143 en regard du tube d'alimentation 107, une ouverture partielle 145 destinée à recevoir l'extrémité libre coudée 111 du tube d'alimentation ce qui permet un chevauchement du tube d'alimentation 107 et de la tubulure 141 améliorant la collecte de l'air chaud.

La tubulure 141 est fixée sur la cloison amont 108 ou sur l'élément de support 106.

De manière préférentielle, la tubulure 141 comporte une partie sensiblement évasée 147 ce qui permet de ne pas perturber l'air qui sort du tube d'alimentation 107 vers la tubulure 141.

La présence de la partie évasée 147 permet d'avoir une recirculation d'air chaud dans le compartiment de dégivrage 103 et ainsi d'assurer un bon dégivrage.

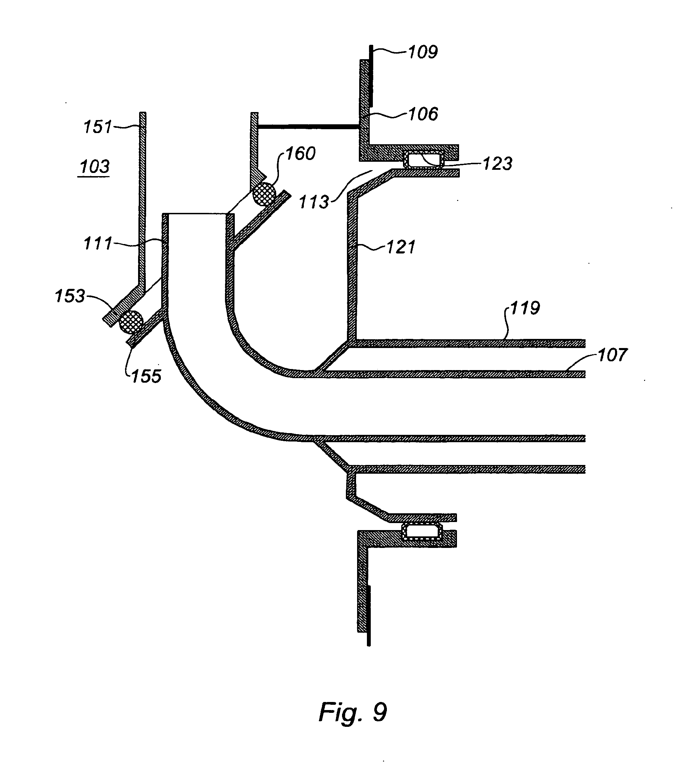

Selon un autre mode de réalisation représenté à la figure 9, l'extrémité libre 111 du tube d'alimentation et la tubulure 151 comportent chacune une platine 153 et 155 destinées à être en regard l'une de l'autre permettant d'assurer une bonne étanchéité entre la tubulure 151 et le tube d'alimentation 107.

De manière préférée, la platine 153 de la tubulure est formée d'une seule pièce avec la paroi de la tubulure 151 permettant ainsi de supprimer les problèmes d'étanchéité entre la platine 153 de la tubulure et la tubulure 151 elle-même.

Selon une autre manière préférée, l'angle des deux platines 153 et 155 par rapport à l'axe secondaire 117 de l'extrémité libre coudée est sensiblement égal à 45° permettant d'améliorer la cinématique et la fiabilité d'écrasement de l'étanchéité.

L'une ou l'autre des platines 153 et 155 peut supporter un dispositif d'étanchéité 160 de type joint. L'angle égal à environ 45° permet d'améliorer la fiabilité de l'écrasement du dispositif d'étanchéité 160.

La taille de l'ouverture 113 doit être suffisante pour permettre le passage de l'ensemble formé par le tube 107, la platine 121, la platine 155 et le joint 160 sans interférence avec l'élément de support 106 ni avec le joint 123.

Bien entendu, la présente invention ne saurait être limitée aux modes de réalisation décrits ci-dessus.

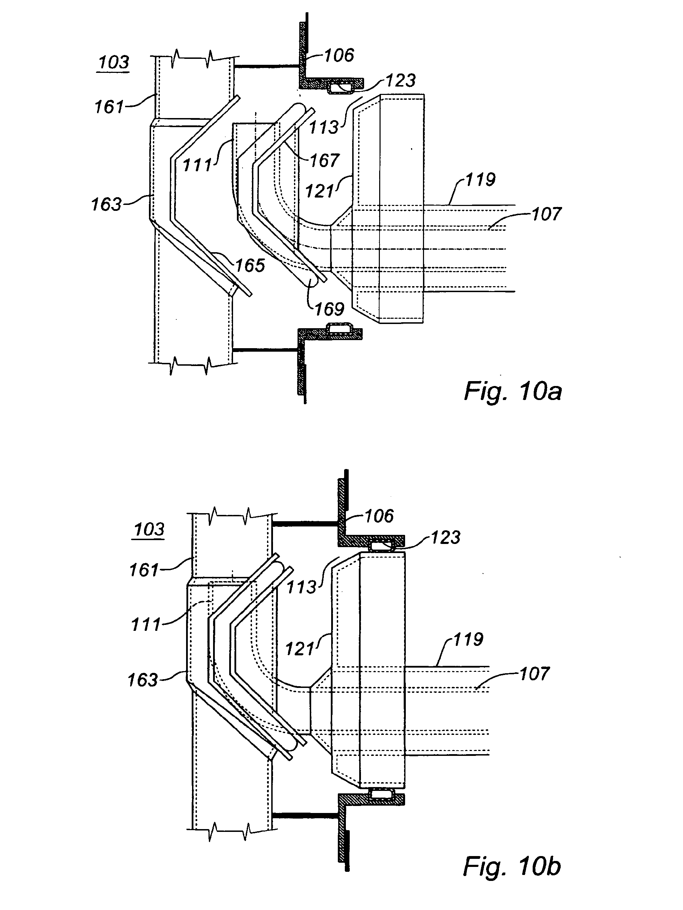

C'est ainsi par exemple que l'on pourrait envisager la variante au mode de réalisation de la figure 9, représentée sur les figures 10a et 10b.

Dans cette variante, la tubulure 161, montée de manière fixe à l'intérieur du compartiment de dégivrage 103, s'étend de part et d'autre de l'extrémité libre coudée 111.

Cette tubulure comprend un renflement 163 sur lequel est formée une ouverture 165 apte à coopérer avec une collerette complémentaire 167 portée par l'extrémité libre coudée 111.

Un joint d'étanchéité 169 est prévu sur cette ouverture ou sur cette collerette.

Comme cela est visible sur la figure 10b, lorsque le dispositif se trouve en position de fonctionnement, le joint 169 est écrasé entre l'ouverture 165 et la collerette 167, et l'extrémité libre coudée 111 est disposée intégralement à l'intérieur de la tubulure 161.

On évite de la sorte toute fuite d'air chaud en dehors de la tubulure 161.

On notera de plus que le renflement 163 pratiqué dans la tubulure 161 permet une circulation régulière, c'est-à-dire sans point d'étranglement, de l'air chaud à l'intérieur de la tubulure 161.

## Revendications

1. Structure d'entrée d'air apte à être montée en amont d'une structure médiane d'une nacelle pour un moteur d'un aéronef, ladite structure d'entrée d'air comprenant :
- une paroi externe intégrant une lèvre,
- une cloison amont (108) définissant avec la paroi externe un compartiment de dégivrage (103) dans la dite lèvre et comprenant un orifice,
- un dispositif d'alimentation en air chaud (105) destiné à alimenter le compartiment de dégivrage (103) en air chaud, ledit dispositif (105) comprenant un tube d'alimentation en air chaud (107) et un élément d'étanchéité périphérique (109) entourant ledit tube d'alimentation (107),
**caractérisée en ce que** le tube d'alimentation en air chaud (107) comporte une extrémité libre (111) coudée, l'orifice (113) de la cloison amont étant configuré pour permettre le passage de l'extrémité libre (111) selon l'axe principal (115) du tube d'alimentation, et **en ce que** l'élément d'étanchéité (109) comporte une platine de contact (121) entourant ledit tube (107) de sorte à assurer l'étanchéité au niveau de la cloison amont (108).

2. Structure selon la revendication précédente, **caractérisée en ce que** la paroi externe est montée mobile par rapport à la structure externe médiane entre une position de fonctionnement dans laquelle l'étanchéité entre le dispositif d'alimentation (105) et l'orifice (113) de la cloison amont est réalisée et une position de maintenance dans laquelle la cloison amont (108) et le dispositif d'alimentation (105) sont distants par coulissement de la structure d'entrée d'air vers l'amont de la nacelle.

3. Structure selon la revendication 1 ou 2, **caractérisée en ce que** l'orifice (113) est configuré pour permettre le passage de la platine de contact (121) et de l'extrémité libre (111).

4. Structure selon l'une quelconque des revendications précédentes, **caractérisée en ce qu'**un tube externe concentrique (119) entoure au moins partiellement le tube d'alimentation (107).

5. Structure selon l'une quelconque des revendications précédentes, **caractérisée en ce que** le tube d'alimentation (107), le tube externe concentrique (119) et la platine de contact (121) sont formés d'une seule pièce.

6. Structure selon la revendication précédente, **caractérisé en ce que** la platine de contact (121) a une forme sensiblement allongée suivant l'axe secondaire (117) de l'extrémité libre du tube d'alimentation, la plus grande longueur (L) suivant l'axe secondaire (117) de l'extrémité libre de la tubulure étant supérieure à la longueur (I) de l'extrémité libre coudée (111).

7. Structure selon l'une quelconque des revendications précédentes, **caractérisée en ce que** l'extrémité libre (111) du tube d'alimentation est sensiblement raccordée à une tubulure (141 ; 151 ; 161) à l'intérieur du compartiment de dégivrage (103) afin de collecter l'air chaud provenant du tube d'alimentation (107).

8. structure selon la revendication précédente, **caractérisée en ce que** la tubulure (141) comporte à l'extrémité en regard du tube d'alimentation (107) une ouverture partielle (145) destinée à recevoir l'extrémité libre coudée (111) du tube d'alimentation.

9. Structure selon la revendication 7 ou 8, **caractérisée en ce que** la tubulure (141) comporte une partie (147) sensiblement évasée.

10. Structure selon la revendication 7, **caractérisée en ce que** l'extrémité libre (111) du tube d'alimentation et la tubulure (151 ; 161) comportent chacun une platine (153, 155 ; 165, 167) destinée à être en regard l'une de l'autre.

11. structure selon la revendication précédente, **caractérisée en ce que** la platine de la tubulure (153 ; 165) est formée d'une seule pièce avec la paroi de la tubulure (151 ; 161).

12. Structure selon la revendication 10 ou 11, **caractérisée en ce que** l'angle des deux platines (153 ; 155) par rapport à l'axe secondaire (117) de l'extrémité libre coudée est sensiblement égale à 45°.

13. Structure selon l'une des revendications 10 ou 11, **caractérisée en ce que** ladite tubulure (161) s'étend de part et d'autre de ladite extrémité libre coudée (111), et **en ce qu'**elle comprend une ouverture (165) apte à coopérer avec une collerette complémentaire (167) portée par ladite extrémité (111).

14. Structure selon la revendication 13, **caractérisée en ce que** ladite ouverture (165) est formée dans un renflement (163) de ladite tubulure (161).

15. Nacelle pour un moteur d'un aéronef, **caractérisée en ce qu'**elle comprend une structure d'entrée d'air selon l'une quelconque des revendications précédentes.

## Claims

1. Air inlet structure capable to be mounted upstream of a central structure of a nacelle of an aircraft engine, the said air intake structure comprising:
- an outer partition incorporating a lip,
- an upstream partition (108) defining with the outer partition a deicing compartment (103) in the said lip and comprising an orifice,
- a hot air supply device (105) intended to supply the deicing compartment (103) with hot air, the said device (105) comprising a hot air supply tube (107) and a peripheral sealing element (109) surrounding the said supply pipe,
**characterised in that** the hot air supply tube (107) comprises an elbowed free end (111), the orifice (113) of the upstream partition being configured to allow passage of the free end (111) according to the main axis (115) of the supply pipe, and **in that** the sealing element (109) comprises a contact plate (121) surrounding the said tube in such a way as to ensure sealing at the upstream partition (108).

2. Structure according to the previous Claim, **characterised in that** the outer wall is mounted movable with respect to the outer central structure between an operating position wherein the sealing between the supply device (105) and the orifice (113) of the upstream partition is made, and a maintenance position wherein the upstream partition (108) and the supply device (105) are separated by sliding of the air intake structure of the upstream of the nacelle.

3. Structure according to Claim 1 or 2, **characterised in that** the orifice (113) is configured to allow passage of the contact plate (121) and the free end (111).

4. Structure according to any one of the previous Claims, **characterised in that** a concentric outer tube (119) surrounds at least partially the supply tube (107).

5. Structure according to any one of the previous Claims, **characterised in that** the supply tube (107), the concentric outer tube (119) and the contact plate (121) are formed in a single piece.

6. Structure according to the previous Claim, **characterised in that** the contact plate (121) has a substantially elongated shape along the secondary axis (117) of the free end of the supply pipe, the longer length (**L**) along the secondary axis (117) of the free end of the tubing being greater than the length (**I**) of the elbowed free end (111).

7. Structure according to any one of the previous Claims, **characterised in that** the free end (111) of the supply tube is substantially connected to a tubing (141; 151; 161) within the deicing compartment (103) in order to collect the hot air from the supply tube (107).

8. Structure according to the previous Claim, **characterised in that** the tubing (141) has, at the end opposite of the supply tube (107), a partial opening (145) intended for receiving the elbowed free end (111) of the supply tube.

9. Structure according to Claim 7 or 8, **characterised in that** the tubing (141) has a part (147) substantially flared.

10. Structure according to Claim 7, **characterised in that** the free end (111) of the supply tube and the tubing (151; 161) each having a plate (153; 155; 165; 167) intended to be opposite to one another.

11. Structure according to the previous Claim, **characterised in that** the plate of the tubing (153; 165) is formed in a single piece with the wall of the tubing (151; 161).

12. Structure according to Claim 10 or 11, **characterised in that** the angle of the two plates (153; 155) with respect to the secondary axis (117) of the elbowed free end is equal substantially to 45°.

13. Structure according to any of the Claims 10 or 11, **characterised in that** the said tubing (161) extends on each side of the said elbowed free end (111), and **in that** it comprises an opening (165) capable of interacting with a complementary flange ring (167) carried by the said end (111).

14. Structure according to Claim 13, **characterised in that** the said opening (165) is formed in a boss (163) of the said tubing (161).

15. Nacelle of an aircraft engine **characterised in that** it comprises an air intake structure according to any one of the previous Claims.

## Patentansprüche

1. Lufteingangsstruktur, die imstande ist, einer mittleren Struktur einer Gondel für einen Motor eines Luftfahrzeugs vorgelagert montiert zu sein, wobei die Lufteingangsstruktur umfasst:
- eine Außenwand, die eine Lippe integriert,
- eine vorgelagerte Trennwand (108), die mit der Außenwand ein Enteisungsfach (103) in der Lippe bildet und eine Öffnung umfasst,
- eine Vorrichtung zur Versorgung mit warmer Luft (105), die dazu bestimmt ist, das Enteisungsfach (103) mit warmer Luft zu versorgen, wobei die Vorrichtung (105) ein Versorgungsrohr mit warmer Luft (107) und ein peripheres Abdichtungselement (109) umfasst, das das Versorgungsrohr (107) umgibt,
**dadurch gekennzeichnet, dass** das Versorgungsrohr mit warmer Luft (107) ein gekrümmtes freies Ende (111) aufweist, wobei die Öffnung (113) der vorgelagerten Trennwand konfiguriert ist, um den Durchgang des freien Endes (111) gemäß der Hauptachse (115) des Versorgungsrohrs zu erlauben, und dass das Abdichtungselement (109) eine Kontaktplatte (121) aufweist, die das Rohr (107) derart umgibt, dass die Dichtigkeit auf Ebene der vorgelagerten Trennwand (108) gewährleistet ist.

2. Struktur nach vorangehendem Anspruch, **dadurch gekennzeichnet, dass** die Außenwand im Verhältnis zur der externen mittleren Struktur zwischen einer Funktionsstellung, in der die Abdichtung zwischen der Versorgungsvorrichtung (105) und der Öffnung (113) der vorgelagerten Trennwand durchgeführt wird und einer Wartungsstellung, in der die vorgelagerte Trennwand (108) und die Versorgungsvorrichtung (105) durch Verschieben der Lufteingangsstruktur vorgelagert zur Gondel beabstandet sind, bewegbar montiert ist.

3. Struktur nach Anspruch 1 oder 2, **dadurch gekennzeichnet, dass** die Öffnung (113) konfiguriert ist, um den Durchgang der Kontaktplatte (121) und des freien Endes (111) zu erlauben.

4. Struktur nach einem der vorangehenden Ansprüche, **dadurch gekennzeichnet, dass** das Versorgungsrohr (107) mindestens teilweise von einem konzentrischen externen Rohr (119) umgeben wird.

5. Struktur nach einem der vorangehenden Ansprüche, **dadurch gekennzeichnet, dass** das Versorgungsrohr (107), das externe konzentrische Rohr (119) und die Kontaktplatte (121) aus einem einzigen Teil gebildet sind.

6. Struktur nach vorangehendem Anspruch, **dadurch gekennzeichnet, dass** die Kontaktplatte (121) eine etwa längliche Form gemäß der sekundären Achse (117) des freien Endes des Versorgungsrohrs hat, wobei die größte Länge (L) gemäß der sekundären Achse (117) des freien Endes des Rohrs länger ist als die Länge (I) des gekrümmten freien Endes (111).

7. Struktur nach einem der vorangehenden Ansprüche, **dadurch gekennzeichnet, dass** das freie Ende (111) des Versorgungsrohrs etwa mit einem Rohr (141; 151; 161) im Enteisungsfach (103) verbunden ist, um die vom Versorgungsrohr (107) kommende warme Luft aufzunehmen.

8. Struktur nach vorangehendem Anspruch, **dadurch gekennzeichnet, dass** das Rohr (141) an dem Ende gegenüber dem Versorgungsrohr (107) eine Teilöffnung (145) aufweist, die dazu bestimmt ist, das gekrümmte freie Ende (111) des Versorgungsrohrs aufzunehmen.

9. Struktur nach Anspruch 7 oder 8, **dadurch gekennzeichnet, dass** das Rohr (141) einen deutlich ausgestellten Abschnitt (147) aufweist.

10. Struktur nach Anspruch 7, **dadurch gekennzeichnet, dass** das freie Ende (111) des Versorgungsrohrs und des Rohrs (151; 161) jeweils eine Platte (153, 155; 165, 167) aufweisen, die dazu bestimmt sind, einander gegenübergestellt zu sein.

11. Struktur nach vorangehendem Anspruch, **dadurch gekennzeichnet, dass** die Platte (153; 165) des Rohrs mit der Wand des Rohrs (151; 161) aus einem einzigen Stück gebildet ist.

12. Struktur nach Anspruch 10 oder 11, **dadurch gekennzeichnet, dass** der Winkel der zwei Platten (153; 155) im Verhältnis zur sekundären Achse (117) des gekrümmten freien Endes etwa gleich 45° ist.

13. Struktur nach einem der Ansprüche 10 oder 11, **dadurch gekennzeichnet, dass** sich das Rohr (161) auf der einen und der anderen Seite des gekrümmten freien Endes (111) erstreckt und dass es eine Öffnung (165) umfasst, die imstande ist, mit einem komplementären Ring (167) zusammenzuarbeiten, der von dem Ende (111) getragen wird.

14. Struktur nach Anspruch 13, **dadurch gekennzeichnet, dass** die Öffnung (165) in einer Ausbauchung (163) des Rohrs (161) ausgebildet ist.

15. Gondel für einen Motor eines Luftfahrzeugs, **dadurch gekennzeichnet, dass** sie eine Lufteingangsstruktur nach einem der vorangehenden Ansprüche umfasst.
